# EUROPEAN PATENT APPLICATION

(11) **EP 1 677 272 A1**
(43) Date of publication of application: **05.07.2006**
(21) Application number: 04817231.6
(22) Date of filing: 17.09.2004
(51) Int. Cl.: G08G 1/16

(54) **DISPLAY DEVICE FOR VEHICLE**

(30) Priority: 21.10.2003 JP 2003361133; 10.09.2004 JP 2004263672
(71) Applicant: NIPPON SEIKI CO., LTD., Nagaoka-shi, Niigata 940-8580 (JP)
(72) Inventor: Nagano, Keiichi, Nippon Seiki Co., Ltd., Nagaoka-shi, Niigata 9402141 (JP); Sahara, Yusuke, Nippon Seiki Co., Ltd., Nagaoka-shi, Niigata 9402141 (JP); Umezawa, Yukie, Nippon Seiki Co., Ltd., Nagaoka-shi, Niigata 9402141 (JP); Kasahara, Tsuyoshi, Nippon Seiki Co., Ltd., Nagaoka-shi, Niigata 9402141 (JP)
(74) Representative: Jackson, Richard Eric
(86) International application number: PCT/JP2004/013659
(87) International publication number: WO 2005/038744

(57) **Abstract**

A display device for vehicles (a head-up display device for vehicles) includes an indicator 2 emitting display light, and display means 1 for projecting display light L to a projection member. Also included is control means 14 for making the display means 1 display thereon a road shape image indicating the shape of a road in front of a vehicle, and three-dimensional information of the road. As the three-dimensional information, the display means is made to display thereon a height difference index informing a height difference of the road.

## Description

### Technical Field

The present invention relates to a display device for vehicles including display means for displaying the shape of a road in front of a vehicle.

### Background Art

Conventionally, as a display device for vehicles, known is a head-up display device that displays virtual images through projection of display light coming from a display unit (display means) to a windshield (projection member) of a vehicle, for example (refer to Patent Document 1). The display unit is configured by placing, exemplarily in a housing, an indicator exemplified by a liquid crystal indicator or others, and a reflector that reflects the display light coming from the indicator, and is disposed in a dashboard of the vehicle. The display light projected by the display unit is reflected by the windshield at a driver' s eye point so that the virtual images are displayed. Such a configuration enables to display, as the virtual images, various types of information on the windshield, e. g., vehicle information including the vehicle speed, the engine RPM (revolutions per minute) or others, and navigation information.

Also known in the above-described display device for vehicles is a device that makes a road shape display showing the shape of a road ahead viewed from the eye point of a vehicle driver (refer to Patent Document 2). With such a display device for vehicles, even if the driver has a difficulty in looking at the real-world road shape due to some weather conditions, road curves, neighboring vehicles, buildings, and others, the driver can understand the actual road shape from the road shape display presented as virtual images.
Patent Document 1: JP-A-11-310055
Patent Document 2: JP-A-2000-211452

### Disclosure of the Invention

### Problems that the Invention is to Solve

The issue here is that, with such a display device for vehicles, the driver perceives the road shape display presented as the virtual images, and from the shape, understands the actual road shape. However, while perceiving the road shape display that is updated as the vehicle drives, the driver is required to determine the road conditions ahead, e.g., whether the displayed road shape is straight, curved, or tightly curved requiring braking operation. As such, it is susceptible to improvement as a function of assisting drivers.

The present invention is proposed in consideration of such problems, and an object thereof is to provide a display device for vehicles with which a driver can understand the shape of a road in front of his or her vehicle, and instantaneously perceive the conditions of the road.

### Means for Solving the Problems

For the aim of solving the above-described problems, the present invention is characterized by including: display means provided with an indicator that emits display light, and projects the display light to a projection member; and control means for making the display means display a road shape image indicating the shape of a road in front of a vehicle, and three-dimensional information of the road.

For the aim of solving the above-described problems, the present invention is characterized by including: display means, and control means for making the display means display a road shape image indicating the shape of a road in front of a vehicle, and three-dimensional information of the road.

Further, the control means is characterized by making the display means display, as the three-dimensional information, a height difference index informing a height difference of the road.

Still further, the control means is characterized by making the display means display, as the three-dimensional information, a slope index informing a horizontal slope of the road.

Still further, the control means is characterized by making the display means display, as the three-dimensional information, a distance index indicting a distance of the road.

Still further, the distance index is characterized by including a plurality of lines of a uniform distance interval.

Still further, the control means is characterized by making the display means display, as the three-dimensional information, a curvature index indicating a curvature of the road.

Still further, the control means is characterized by, when the curvature of the road is a predetermined setting value or larger or larger than the setting value, making the display means display, as the three-dimensional information, a curve warning display informing that the road is tightly curved.

Still further, the road shape image is characterized by including a line indicating a width line of the road.

Still further, the road shape image is characterized by including a line indicating the center line of the road.

Still further, the control means is characterized by applying a mapping process to a texture image on the road shape image.

Still further, in the road shape image, the texture image is characterized by varying in pattern density or color between a portion of a road shape in the vicinity of the vehicle, and a portion of the road shape at a distance from the vehicle.

Still further, the control means is characterized by making the display means display the road shape image to overlay the road.

Still further, the control means is characterized by making the display means display an own vehicle index indicating the position of the vehicle corresponding to the road shape image.

Still further, when the own vehicle index is at a warning position, the control means is characterized by making the display means display a position warning display as the three-dimensional information.

Still further, when the vehicle is at a warning position, the control means is characterized by making the display means display a position warning display as the three-dimensional information.

Still further, the control means is characterized by displaying in color at least a portion of the road shape image as the position warning display.

Still further, when the vehicle is driving at a speed requiring warning in consideration of the shape of the road in front of the vehicle, the control means is characterized by making the display means display a speed warning display as the three-dimensional information.

Still further, the display device for vehicles is characterized by including: a storage section that stores the road shape image, and display formats and display settings of the three-dimensional information; and operation means for changing the road shape image, and the display formats and the display settings of the three-dimensional information.

### Advantage of the Invention

The present invention relates to a display device for vehicles provided with display means for displaying the shape of a road in front of a vehicle, with which a driver can understand the shape of the road in front of the vehicle, and can instantaneously perceive the conditions of the road.

### Brief Description of the Drawings

[FIG. 1] FIG. 1 is a cross sectional view of display means of a vehicle-use head-up display device in an embodiment of the present invention.
[FIG. 2] FIG. 2 is a schematic diagram of the vehicle-use head-up display device of the embodiment same as above.
[FIG. 3] FIG. 3 is a block diagram of the vehicle-use head-up display device of the embodiment same as above.
[FIG. 4] FIG. 4 is a diagram of a display image of the vehicle-use head-up display device of the embodiment same as above.
[FIG. 5] FIG. 5 is a diagram of a display image of the vehicle-use head-up display device of the embodiment same as above.
[FIG. 6] FIG. 6 is a diagram of a display image of the vehicle-use head-up display device of the embodiment same as above.
[FIG. 7] FIG. 7 is a diagram of a display image of the vehicle-use head-up display device of the embodiment same as above.
[FIG. 8] FIG. 8 is a diagram of a display image of the vehicle-use head-up display device of the embodiment same as above.

### Description of Reference Numerals and Signs

- 1: display means
- 2: indicator
- 3: circuit board
- 4: reflector
- 4a: reflective surface
- 5: retention member
- 6: housing
- 6a: light-shielding wall
- 7: translucent cover
- 10: speed sensor
- 11: GPS reception section
- 12: storage medium
- 13: operation means
- 14: control means
- 15: microcomputer
- 15a: CPU
- 15b: ROM
- 15c: RAM
- 16: drive circuit
- 17: storage section
- 20: road shape image
- 20a: left-side width line
- 20b: center line
- 20c: right-side width line
- 20d: texture image
- 21: own vehicle index
- 22: height difference index
- 23: slope index
- 23a: horizontal line
- 23b: slope line
- 24: distance index.
- 25: curve warning display
- 25a: arrow index
- 25b: number index (curvature index)
- 26: position warning display
- 27: speed warning display
- A: vehicle
- D: eye point
- L: display light
- V: virtual image
- W: windshield

### Best Mode for Carrying Out the Invention

In the below, by referring to the accompanying drawings, described is an embodiment in which the present invention is applied to a head-up display device for vehicles(display device for vehicles).

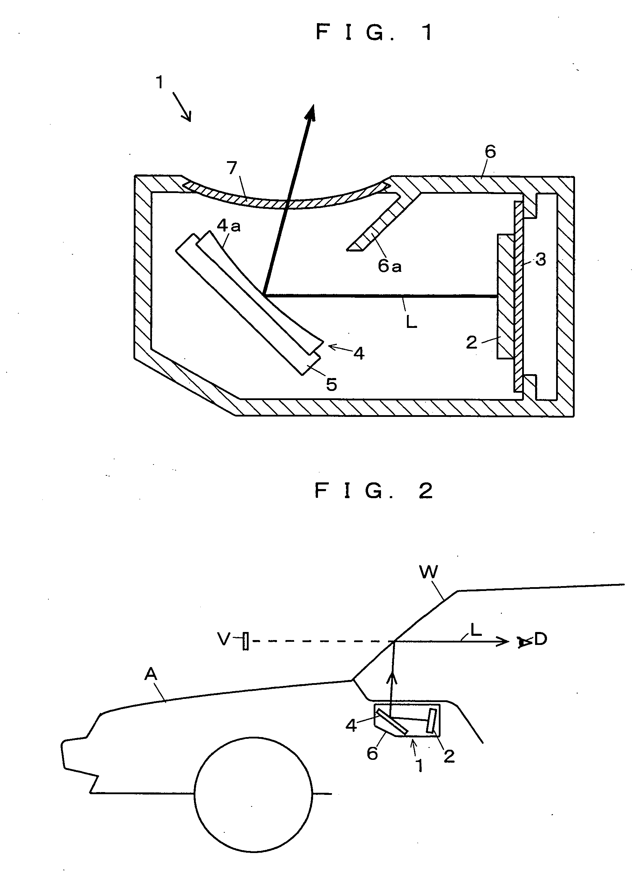

In FIGS. 1 and 2, 1 denotes a display unit, and this display means 1 is disposed inside of a dashboard of a vehicle A. Display light L to be projected by the display means 1 is reflected in the direction of an eye point D of a driver by a combiner-processed windshield W, and a virtual image V is displayed. The driver can observe the virtual image V with the landscape overlaid thereon.

2 denotes an indicator, and this indicator 2 is configured by a TFT liquid crystal element and backlight means. 3 denotes a circuit board, and to this circuit board 3, the indicator 2 is mounted. 4 denotes a reflector, and this reflector 4 reflects the display light L emitted by the indicator 2 to the windshield W. A reflective surface 4a of the reflector 4 is a concave surface, and can enlarge the display light L from the indicator 2 for projection to the windshield W. 5 denotes a retention member, and the reflector 4 is attached to the retention member 5 using a double-faced adhesive tape. Note here that the indicator 2 is not restrictive to the configuration of including the liquid crystal element, and may be the configuration of including an organic EL display panel, for example.

6 denotes a housing, and this housing 6 carries therein the indicator 2, the circuit board 3, the reflector 4, and others. The housing 6 is provided with a translucent cover 7 through which the display light L passes. The translucent cover 7 is made of translucent resin such as acrylic resin, and formed curved. The housing 6 is provided with a light-shielding wall 6a for the purpose of preventing a phenomenon (washout) in which outside lights such as sun rays enter into the indicator 2 to make the virtual V difficult to see.

FIG. 3 is a block diagram of a head-up display device for vehicles. The head-up display device for vehicles is configured mainly by a speed sensor 10, a GPS (Global Positioning System) radio wave reception section 11, a storage medium 12, operation means 13, control means 14, and the display means 1.

The speed sensor 10 detects the driving speed of the vehicle A, and outputs a speed signal to the control means 14.

The GPS radio wave reception section 11 is provided with a GPS reception antenna, and amplifies, as a high-frequency signal, incoming radio waves being position information received from artificial satellites by the reception antenna for supply to the control means 14.

The storage medium 12 is exemplified by CD-ROM, DVD-ROM, hard disk, or others, is storing map data and road condition data indicating the road conditions, and outputs the map data and the road condition data to the control means 14. The road condition data includes road shape data indicating the shape of the road, height data indicating the height of the road at a predetermined position, slope data indicating the horizontal slope of the road, curvature data indicating the curvature of the road, and the like.

The operation means 13 is provided with a plurality of switches such as selection key and enter key to change display formats and display settings of a road shape image of various types of three-dimensional information about the road which will be described later. Through operation of the operation means 13, the driver can arbitrarily select the display format of the road shape image and the three-dimensional information. Moreover, as the display setting, the driver can arbitrarily select whether to display the road shape image and the three-dimensional information or not, or the various setting values for display of the three-dimensional information.

The control means 14 is configured by a microcomputer 15, a drive circuit 16, and a storage section 17. The microcomputer 15 is provided with a CPU 15a, a ROM 15b, and a RAM 15c. The drive circuit 16 is provided for converting a control signal from the microcomputer 14 to a drive signal of the display means 1, and is electrically connected to the display means 1. The storage section 17 is exemplified by an EEPROM, a flash memory, or others, and is provided for storing display format data and display setting data of the road shape image and the three-dimensional information. Based on the speed signal output from the speed sensor 10, and the position data of the vehicle A provided by the GPS radio wave reception section 11, the control means 14 makes inputs from the storage medium 13 the map data and the road condition data indicating the road conditions in front of the vehicle A (data mapping process). The control means 14 also goes through a predetermined calculation process based on the road condition data, generates the road shape image and the three-dimensional information based on the display format data and the display setting data stored in the storage section 17, and outputs the drive signal to the indicator 2 of the display means 1 via the drive circuit 16 for making the display means 1 display thereon the road shape image and the three-dimensional information.

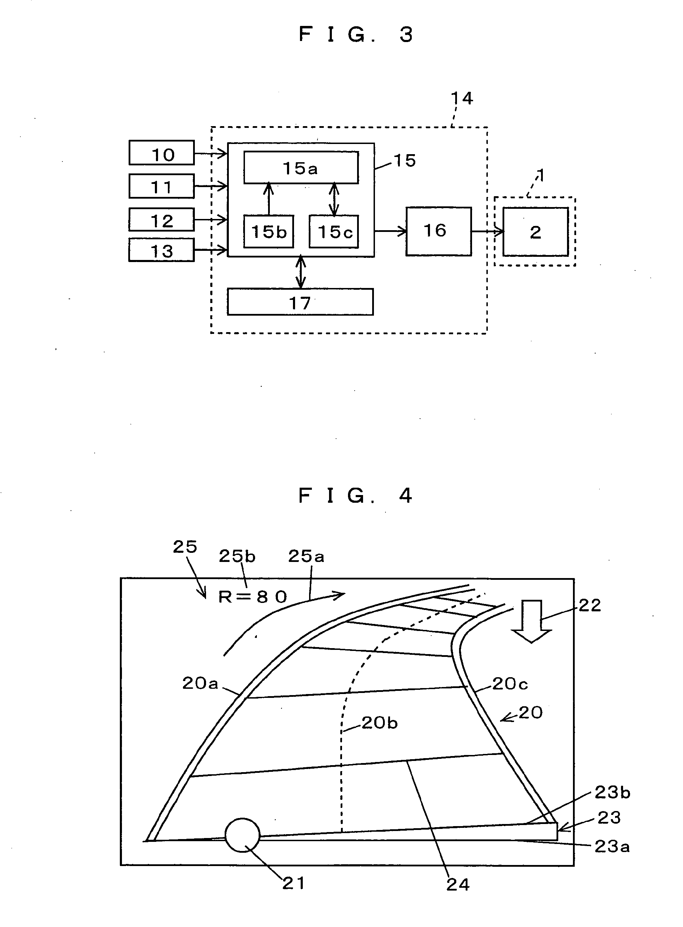

Next, based on FIGS. 4 to 6, a display image of the display means 1 is described. FIGS. 4 to 6 are each a diagram showing a display image displayed by the display means 1 by the control means 14, and perceived as a virtual image V by the driver.

The display image includes a road shape image 20 indicating the shape of a road in front of the vehicle A, various types of three-dimensional information about the road, and an own vehicle index 21 indicating the position of the vehicle A corresponding to the road shape image 20. The "three-dimensional information" here denotes an image of informing conditions relating to the three-dimensional shape of the road in front of the vehicle A. In this embodiment, as the three-dimensional information, displayed are a height difference index 22, a slope index 23, a distance index 24, a curve warning display 25, a position warning display 26, and a speed warning display 27.

The road shape image 20 includes a left-side width line 20a indicating the left-side (on the side of a traffic lane) width line of the road in front of the vehicle A, a center line 20b indicating the center line of the road, and a right-side width line 20c indicating the right-side (on the side of the opposite lane) width line of the road. The left-side width line 20a and the right-side width lane 20c are those indicating white lines drawn on the road, for example, and three-dimensionally indicating the shape of the traffic lane and the opposite lane of the vehicle A as the road in front of the vehicle A. The center line 20b indicates the center line drawn on the road, or for any road not drawn with the center line, indicates the line being at substantially the center of two width lines 20a, 20c of the road. With the left-side width line 20a, the center line 20b, and the right-side width line 20c, the driver can know the shape of the road in front of the vehicle A. Note here that the road shape image 20 may indicate only the traffic lane of the vehicle A.

The height difference index 22 is of informing the driver of any height difference of the road in front of the vehicle A. That is, it informs whether the road in front of the vehicle A is sloped upward or downward. The control means 14 compares the height of a predetermined position ahead of the vehicle A derived from the road condition data, for example, with the height of the current position of the vehicle A. In comparison with the current position, when the predetermined position is lower than a predetermined height difference stored in the storage section 17 as a setting value, as shown in FIG. 4, the control means 14 displays a downward arrow index as the height difference index 22. In comparison with the current position, when the predetermined position is higher than the predetermined height difference, an upward arrow index is displayed as the height difference index 22. The height difference index 22 helps the driver instantaneously perceive that the road in front of the vehicle A is sloped upward or downward. Note here that the display format of the height index 22 is arbitrary, and may be a number index indicating the height difference, or any colored region to be formed on the road shape image 20, for example.

The slope index 23 is of informing the driver of any horizontal slope of the road in front of the vehicle A. The slope index 23 includes a horizontal line 23a indicating a horizontal line, and a slope line 23b displayed along the slope of the road shape image 20. By comparing and reading the horizontal line 23a and the slope line 23b, the driver can instantaneously understand toward which the road in front of the road A is sloped, i. e., right or left. The display format of the slope index 23 is arbitrary, and may display a number index indicating the slope, for example.

The distance index 24 is of indicating the distance of the road in front of the vehicle A, and displays the uniform distance intervals using a plurality of distance lines to be disposed on the road shape image 20. The distance index 24 helps the driver instantaneously know how far a shape change, e.g. , curve, is observed on the road in front of the vehicle A from the current position of the vehicle A. Note here that the display format of the distance index 24 is arbitrary, and may be a colored region to be formed on the road shape image 20, for example.

The curve warning display 25 is of informing the driver that the road in front of the vehicle A is tightly curved, and includes an arrow index 25a displayed along the road shape image 20, and a number index 25b being a curvature index indicating the curvature of the road. The number index 25b indicates the radius of curvature of the road. When the curvature of the road derived from the road condition data is equal to or larger than a predetermined setting value stored in the storage section 17 or larger than the setting value, i. e., when the radius of curvature of the road is equal to or smaller than the predetermined value of smaller than the predetermined value, the control section 14 determines that the road is tightly curved, and makes the display means 1 display thereon the curve warning display 25. The curve warning display 25 helps the driver instantaneously perceive that the road in front of the vehicle A is tightly curved. Also, the number index 25b being the curvature index helps the driver instantaneously perceive how much the road in front of the vehicle A is curved. Note here that the display format of the curve warning display 25 is arbitrary, and may display a text index such as "attention to the right curve" or others.

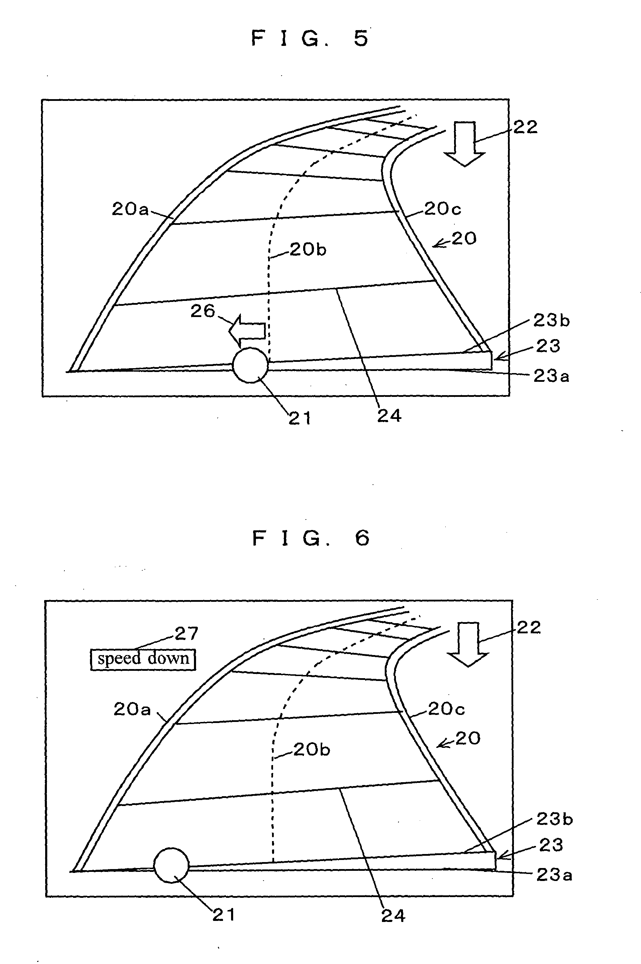

The own vehicle index 21 indicates the position of the vehicle A in accordance with the road shape image 20, and is a circular index. The own vehicle index 21 helps the driver instantaneously perceive specifically where the vehicle A is driving on the real-world road. When the distance from the own vehicle index 21 to the left-side width line 20a or to the center line 20b is equal to or smaller than the predetermined setting value stored in the storage section 17 or smaller than the setting value, the control means 14 determines that the own vehicle index 21 is at the position requiring warning, and makes the display means 1 display thereon the position warning display 26 as shown in FIG. 5. The position warning display 26 is displayed in the vicinity of the own vehicle index 21, for example, and is an arrow index indicating the direction for the vehicle A to move. The position warning display 26 helps the driver instantaneously perceive that the vehicle A is at the position requiring warning on the road. Note here that the display format of the own vehicle index 21 is arbitrary, and may be a vehicle-shaped mark, for example. Further, the display format of the position warning display 26 is arbitrary, and may display in color the own vehicle index 21, or display a text index such as "attention to the road for driving" or others.

When the driving speed of the vehicle A is equal to or faster than a predetermined speed being a setting value stored in the storage section 17 in accordance with the curvature of the road in front of the vehicle A or faster than the predetermined speed, the control means 14 determines that the vehicle A is driving at the speed requiring warning in consideration of the road shape in front of the vehicle A, and makes the display.means 1 display thereon the speed warning display 27 as shown in FIG. 6. The speed warning display 27 is a text index indicating "speed down" to encourage the driver to reduce the speed, for example. The speed warning display 27 helps the driver instantaneously perceive that the vehicle A is driving at the faster speed in consideration of the expected road shape change in front of the vehicle A, i.e., curved. Note that the display format of the speed warning display is arbitrary, and may display in color the own vehicle index 21, or display a mark for encouraging the speed reduction.

The head-up display device for vehicles is provided with the indicator 2 emitting the display light L, and is also provided with the display means 1 that projects the display light L to the windshield W, and the control means 14 that makes the display means 1 display thereon the road shape image 20 that indicates the shape of the road in front of the vehicle A, and the three-dimensional information of the road. The road shape image 20 includes the left-side width line 20a and the right-side width line 20c indicating the right and left width lines of the road, respectively. The road shape image 20 includes the center line 20b indicating the center line of the road. With such a configuration, the road shape image 20 helps the driver perceive the shape of the road in front of the vehicle A even when he or she has a difficulty in looking at the real-world road shape due to some weather conditions, road curves, neighboring vehicles, buildings, and others. What is more, with the three-dimensional information displayed, the driver can instantaneously perceive the conditions relating to the three-dimensional shape of the road in front of the vehicle A.

As the three-dimensional information, the height difference index 22 informing the height difference of the road is displayed by the display means 1 so that the driver can instantaneously perceive that the road in front of the vehicle A is sloped upward or downward.

Further, as the three-dimensional information, the slope index 23 informing the horizontal slope of the road is displayed by the display means 1 so that the driver can instantaneously perceive in which direction of right and left the road in front of the vehicle A is sloped.

Moreover, as the three-dimensional information, the distance index 24 made of a plurality of lines disposed on the road shape image 20 with uniform distance intervals indicating the distance of the road is displayed by the display means 1 so that the driver can instantaneously know how far a shape change, e.g., curve, is expected on the road in front of the vehicle A from the current position of the vehicle A.

When the curvature of the road is equal to or larger than the predetermined value or larger than the predetermined value, the control means 14 makes the display means 1 display thereon the curve warning display 25 informing that the road is tightly curved as the three-dimensional information so that the driver can instantaneously perceive that the road in front of the vehicle A is tightly curved. The control means 14 also makes the display means 1 display thereon the number index 25b being the curvature index indicating the curvature of the road as the three-dimensional information so that the driver can instantaneously perceive how much the road in front of the vehicle A is curved.

The own vehicle index 21 indicating the position of the vehicle A in accordance with the road shape image 20 is displayed by the display means 1 so that the driver can instantaneously perceive specifically where the vehicle A is driving on the real-world road.

When the own vehicle index 21 is located at the position requiring warning, the control means 14 makes the display means 1 display thereon the position warning display 26 as the three-dimensional information so that the driver can instantaneously perceive that the vehicle A is located at the position requiring warning on the road.

When the vehicle A is driving at the speed requiring warning in consideration of the road shape in front of the vehicle A, the control means 14 makes the display means 1 display the speed warning display 27 as the three-dimensional information so that the driver can instantaneously perceive that the vehicle A is driving at the faster speed in consideration of the expected road shape change in front of the vehicle A, i.e., curved.

With the provision of the storage section 17 storing the display formats and the display settings of the road shape images 20 and the above-described various types of three-dimensional information, i.e., the height difference index 22, the slope index 23, the distance index 24, the curve warning display 25, the position warning display 26, and the speed warning display 27, and the operation means 13 that changes the display formats and the display settings, through operation of the operation means 13, the driver becomes able to select the display formats and the display settings of the road shape image 20 and the three-dimensional information to suit his or her preferences so that the marketability as the head-up display device for vehicles can be enhanced.

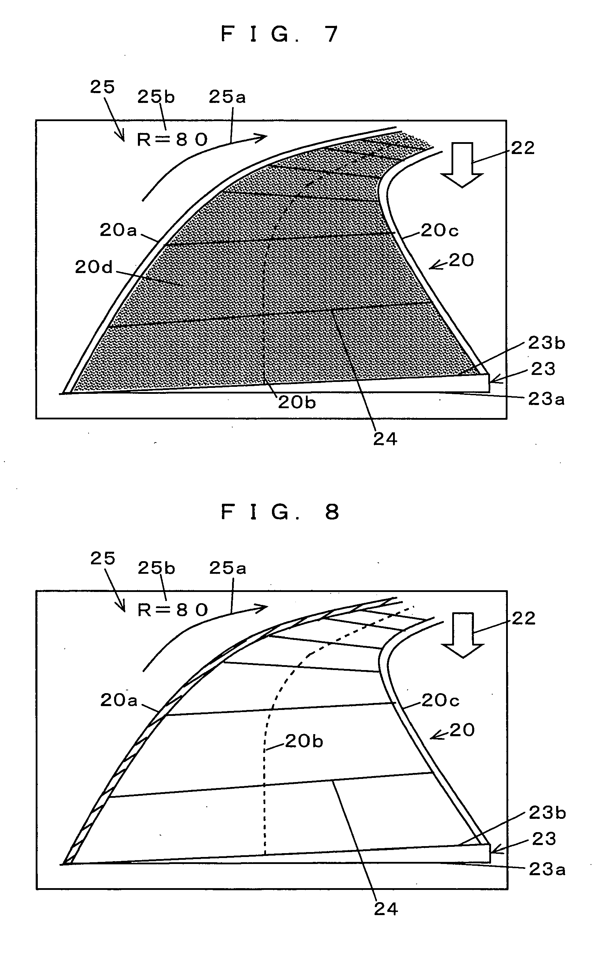

Described next is another exemplary display in the embodiment of the present invention. FIGS. 7 and 8 are each a diagram showing a display image to be displayed by the display means 1 by the control means 14, and to be perceived by the driver as a virtual image V. FIG. 7 shows a display image as a result of a texture mapping process applied to the road shape image 20. The texture mapping process denotes a process of attaching a predetermined image to the surface of an object. In FIG. 7, the road shape image 20 serving as an object is attached with a texture image 20d indicating the road surface. Note here that texture image data for rendering the texture image 20d is stored in the storage medium 12. The control means 14 reads the texture image data from the storage medium 12, and applies the texture mapping process to the road shape image 20 for attachment of the texture image 20d. Note here that the texture image 20d for use for the texture mapping process may be a cut-out actual texture image being a two-dimensional actual image of a natural object (road surface), or an artificial texture image artificially created to look like the road surface. The texture image 20d may vary in pattern density or color successively or in stages, e.g., the pattern density is low or the color is light at a portion indicating the road shape in the vicinity of the vehicle A, and the pattern density is high or the color is dark at a portion indicating the road shape at a distance from the vehicle A.

As shown in FIG. 7, the head-up display device for vehicles represents the road surface by the control means 14 mapping the texture image 20d to the road shape image 20. Also, in the road shape image 20, the texture image 20d is varied in pattern density or color between a portion indicating the road shape in the vicinity of the vehicle A, and a portion indicating the road shape at a distance from the vehicle A. This enables the driver to clearly perceive the depth direction of the road compared with a case where the road shape is represented only by lines.

FIG. 8 shows a display image in which the position warning display is displayed for a case where the own vehicle index 21 is not displayed. Based on the position data of the vehicle A, and the map data and the road condition data provided by the storage medium 13, when the distance from the vehicle A to the center line or to the left-side width line is equal to or smaller than a predetermined setting value stored in the storage section 17 or smaller than the setting value, the control means 14 determines that the vehicle A is at the position requiring warning, and displays in red the region of the road shape image 20 in the vicinity of the vehicle A as the position warning display. FIG. 8 shows the position warning display in a case where the vehicle A comes closer to the left-side width line, and the left-side width line 20a indicating the left-side width line is displayed in color. When the vehicle A comes closer to the center line, the center line 20b indicating the center line is displayed in color. The to-be-colored region for the position warning display is arbitrary, and may display in color the neighboring area of the center line 20a of the road shape image 20 or the neighboring area of the left-side width line 20a thereof.

As shown in FIG. 8, in the head-up display device for vehicles, when the vehicle A is at the position requiring warning, the control means 14 makes the display means 1 display thereon the position warning display as the three-dimensional information. Moreover, as the position warning display, at least a part of the road shape image 20 is displayed in color. This helps the driver instantaneously perceive that the vehicle A is at the position requiring warning on the road.

In the embodiment of the present invention, although no mention is made about the display position on the windshield W of the display image displayed as the virtual image V by the display means 1, as another embodiment of the present inventiby the display means 1 may be made to display the road shape image 20 in such a manner as to overlay the real-world road in front of the vehicle A. In the head-up display device for vehicles of such a configuration, the road shape image 20 is displayed over the real-world road so that the shape of the road can be perceived without the need for the comparison and reading between the road shape image 20 and the real-world road. Therefore, even if the driver has a difficulty in looking at the real-world road shape due to some weather conditions, road curves, neighboring vehicles, buildings, and others, the driver can understand the actual road shape with more ease.

In the embodiment of the present invention, the display light L coming from the display means 1 is projected on the windshield W. However, the projection member of the present invention is not restrictive to such an embodiment, and may project the display light from the indicator to a combiner disposed on the windshield of the vehicle or on a dashboard of the vehicle. Moreover, in the display device for vehicles of claim 2 of the present invention, the display means is not restrictive to the one projecting the display light to the projection member, and may include such display means that the driver directly looks at the indicator.

### Industrial Applicability

The present invention is directed to a display device for vehicles including display means that displays the shape of a road in front of the vehicle, and is applied to a display device for vehicles including display means that projects the display light to the projection member such as windshield, or display means that the driver directly looks at the indicator.

## Claims

1. A display device for vehicles, **characterized by** comprising:
display means provided with an indicator that emits display light, and projects the display light to a projection member; and control means for making the display means display a road shape image indicating a shape of a road in front of a vehicle, and three-dimensional information of the road.

2. A display device for vehicles, **characterized by** comprising:
display means; and control means for making the display means display a road shape image indicating a shape of a road in front of a vehicle, and three-dimensional information of the road.

3. The display device for vehicles according to claim 1 or 2, **characterized in that**
the control means makes the display means display, as the three-dimensional information, a height difference index informing a height difference of the road.

4. The display device for vehicles according to claim 1 or 2, **characterized in that**
the control means makes the display means display, as the three-dimensional information, a slope index informing a horizontal slope of the road.

5. The display device for vehicles according to claim 1 or 2, **characterized in that**
the control means makes the display means display, as the three-dimensional information, a distance index indicting a distance of the road.

6. The display device for vehicles according to claim 5, **characterized in that** the distance index includes a plurality of lines of a uniform distance interval.

7. The display device for vehicles according to claim 1, **characterized in that**
the control means makes the display means display, as the three-dimensional information, a curvature index indicating a curvature of the road.

8. The display device for vehicles according to claim 1 or 2, **characterized in that**
when the curvature of the road is a predetermined setting value or larger or larger than the setting value, the control means makes the display means display, as the three-dimensional information, a curve warning display informing that the road is tightly curved.

9. The display device for vehicles according to claim 1 or 2, **characterized in that**
the road shape image includes a line indicating a width line of the road.

10. The display device for vehicles according to claim 1 or 2, **characterized in that**
the road shape image includes a line indicating a center line of the road.

11. The display device for vehicles according to claim 1 or 2, **characterized in that**
the control means applies a mapping process to a texture image on the road shape image.

12. The display device for vehicles according to claim 11, **characterized in that**
in the road shape image, the texture image varies in pattern density or color between a portion of a road shape in the vicinity of the vehicle, and a portion of the road shape at a distance from the vehicle.

13. The display device for vehicles according to claim 1, **characterized in that**
the control means makes the display means display the road shape image to overlay the road.

14. The display device for vehicles according to claim 1 or 2, **characterized in that**
the control means makes the display means display an own vehicle index indicating a position of the vehicle corresponding to the road shape image.

15. The display device for vehicles according to claim 14, **characterized in that**
when the own vehicle index is at a warning position, the control means makes the display means display a position warning display as the three-dimensional information.

16. The display device for vehicles according to claim 1 or 2, **characterized in that**
when the vehicle is at a warning position, the control means makes the display means display a position warning display as the three-dimensional information.

17. The display device for vehicles according to claim 15 or 16, **characterized in that**
the control means displays in color at least a portion of the road shape image as the position warning display.

18. The display device for vehicles according to claim 1 or 2, **characterized in that**
when the vehicle is driving at a speed requiring warning in consideration of the shape of the road in front of the vehicle, the control means makes the display means display a speed warning display as the three-dimensional information.

19. The display device for vehicles according to claim 1 or 2, **characterized by** comprising:
a storage section that stores the road shape image, and a display format and a display setting of the three-dimensional information; and operation means for changing the road shape image, and the display format and the display setting of the three-dimensional information.
